# EUROPÄISCHE PATENTSCHRIFT

(11) **EP 4 491 997 B1**
(45) Veröffentlichungstag und Bekanntmachung des Hinweises auf die Patenterteilung: **19.08.2026**
(21) Anmeldenummer: 23185049.6
(22) Anmeldetag: 12.07.2023
(51) Int. Cl.: G01B 11/06

(54) **VORRICHTUNG UND VERFAHREN ZUM BESTIMMEN DES BRECHUNGSINDEX UND/ODER DER SCHICHTDICKE EINER SCHICHT EINES GEGENSTANDS**
DEVICE AND METHOD FOR DETERMINING THE REFRACTIVE INDEX AND/OR THE LAYER THICKNESS OF A LAYER OF AN OBJECT
DISPOSITIF ET PROCÉDÉ DE DÉTERMINATION DE L'INDICE DE RÉFRACTION ET/OU DE L'ÉPAISSEUR DE COUCHE D'UN OBJET

(43) Veröffentlichungstag der Anmeldung: 15.01.2025
(73) Patentinhaber: SIKORA AG, 28307 Bremen (DE)
(72) Erfinder: SCHUH, Kolja Tobias, 28307 Bremen (DE)
(74) Vertreter: Hauck Patent- und Rechtsanwälte PartmbB

(56) Entgegenhaltungen:
- CN-A- 108 020 165
- DE-A1- 102020 116 810
- DE-U1- 202018 006 759

## Beschreibung

Die Erfindung betrifft eine Vorrichtung und ein Verfahren zum Bestimmen des Brechungsindex und/oder der Schichtdicke einer Schicht eines Gegenstands.

Zum Beispiel bei in einer Extrusionsvorrichtung extrudierten Kunststoffgegenständen, zum Beispiel Kunststoffrohren oder plattenförmigen Kunststoffgegenständen, besteht der Wunsch, möglichst einfach eine präzise Schichtdickenmessung durchzuführen. Dies ist beispielsweise bedeutend für eine möglichst frühzeitige korrekte Einstellung der Extrusionsvorrichtung zum Erreichen einer gewünschten Endgeometrie des Gegenstands. Es ist bekannt, die Schichtdicke zum Beispiel von Kunststoffrohren mittels Terahertzstrahlung zu messen. Kunststoffe sind zumindest teiltransparent für Terahertzstrahlung, so dass auf einen Kunststoffgegenstand ausgesandte Terahertzstrahlung an den eine zu messende Schicht begrenzenden Grenzflächen zumindest teilweise reflektiert wird. Beispielsweise auf Grundlage von Laufzeitmessungen kann die optische Schichtdicke präzise und zuverlässig gemessen werden.

Mit den bekannten Verfahren wird zunächst die optische Schichtdicke gemessen. Für das Bestimmen der geometrischen Schichtdicke aus der optischen Schichtdicke ist die Kenntnis des genauen Brechungsindex des Schichtmaterials Voraussetzung. Es ist zwar möglich, den Brechungsindex für das extrudierte Material als bekannt anzunehmen. Dies ist allerdings mit einer Unsicherheit verbunden. Zum einen ist der Brechungsindex temperaturabhängig, so dass er sich im Laufe der Abkühlung eines extrudierten Gegenstandes verändert. Zum anderen werden dem zu extrudierenden Material häufig Additive zugemischt, die den Brechungsindex des Ausgangsmaterials verändern. Die genaue Menge und teilweise auch Art der zugegebenen Additive sind nicht immer zuverlässig bekannt. Auch schwanken Additivanteile innerhalb des Gegenstands.

Aus WO 2016/139155 A1 ist ein Verfahren bekannt, bei dem ein unbekannter Brechungsindex eines Kunststoffrohrs mittels Terahertzstrahlung bestimmt werden kann. Auf dieser Grundlage können mit einer Terahertzmessvorrichtung die optische Schichtdicke und der Brechungsindex, und damit die geometrische Schichtdicke, bestimmt werden. Dabei durchstrahlt Terahertzstrahlung den Gegenstand und wird von einem auf einer gegenüberliegenden Seite des Terahertzsenders angeordneten Reflektor zurück zu dem beispielsweise mit dem Sender zu einem Transceiver kombinierten Terahertzempfänger reflektiert. Aus einem Vergleich der Laufzeit der Terahertzstrahlung mit in dem Strahlungsweg angeordnetem Gegenstand mit der Laufzeit ohne in dem Strahlungsweg angeordnetem Gegenstand kann der zunächst unbekannte Brechungsindex des Materials bestimmt werden.

Mit dem erläuterten Verfahren ist eine zuverlässige und schnelle Bestimmung eines unbekannten Brechungsindex des Gegenstands mit nur einer Messvorrichtung möglich. Allerdings setzt das bekannte Verfahren Zugang von beiden Seiten des Gegenstands voraus, um den durch den Gegenstand im Messweg verursachten Laufzeitunterschied bestimmen zu können. Dies gilt sowohl bei der erläuterten Anordnung eines Reflektors auf einer einem Transceiver gegenüberliegenden Seite des Gegenstands als auch bei einer Anordnung des Senders und Empfängers auf gegenüberliegenden Seiten des Gegenstands. In der Praxis ist diese Zugänglichkeit von beiden Seiten nicht immer gegeben. Beispielsweise bei Rohren kann dies einen Zugang in den Innenraum des Rohrs erforderlich machen, der schwierig zu bewerkstelligen und in der Regel nur in Endbereichen des Rohrs überhaupt möglich ist. Darüber hinaus setzt das bekannte Verfahren einen Gegenstand voraus, der von der Terahertzstrahlung tatsächlich vollständig durchstrahlt werden kann. Handelt es sich bei dem Gegenstand zum Beispiel um einen mehrschichtig aufgebauten Gegenstand, bei dem die hinsichtlich ihrer Schichtdicke zu vermessende, für Terahertzstrahlung transparente Schicht auf einer für Terahertzstrahlung nicht transparenten Trägerschicht, zum Beispiel aus Metall, angeordnet ist, scheidet das vorgenannte Verfahren zum Bestimmen des Brechungsindex aus.

Ausgehend von dem erläuterten Stand der Technik liegt der Erfindung die Aufgabe zugrunde, eine Vorrichtung und ein Verfahren der eingangs genannten Art bereitzustellen, mit denen ohne das Erfordernis der Zugänglichkeit von gegenüberliegenden Seiten des Gegenstandes bzw. ohne das Erfordernis eines für eine vollständige Durchstrahlung mit Terahertzstrahlung geeigneten Gegenstands der Brechungsindex und/oder die Schichtdicke des Gegenstands zuverlässig und einfach gemessen werden kann.

Aus CN 108020165 A ist eine Terahertzmessvorrichtung zum Messen der Dicke nicht metallischer Materialien auch bei unbekanntem Brechungsindex bekannt. Hierzu werden ein in ihrer Position verstellbarer Terahertzsender und Terahertzempfänger vorgeschlagen, die in einem ersten Messschritt Messstrahlung senkrecht auf die Oberfläche des zu vermessenden Materials aussenden und von Grenzschichten der zu vermessenden Schicht reflektierte Terahertzstrahlung empfangen. In einem zweiten Messschritt werden Terahertzsender und Terahertzempfänger auf einem Kreisbogen in entgegengesetzte Richtungen verfahren und es wird erneut Terahertzstrahlung auf die Oberfläche des Materials ausgesandt und von den Grenzflächen der Schicht reflektierte Terahertzstrahlung empfangen. Aus den Zeitdifferenzen zwischen dem Aussenden und Empfangen der Terahertzstrahlung in den beiden Messschritten werden rechnerisch der Brechungsindex und die Dicke des Materials bestimmt.

Weitere Terahertzmessvorrichtungen zum Messen einer Wanddicke von Gegenständen unter Bestimmung des Brechungsindex sind bekannt aus DE 10 2020 116 810 A1 und DE 20 2018 006 759 U1.

Die Erfindung löst die Aufgabe durch die unabhängigen Ansprüche 1 und 15. Vorteilhafte Ausgestaltungen finden sich in den abhängigen Ansprüchen, der Beschreibung und den Figuren. Die Erfindung löst die Aufgabe für eine Vorrichtung der eingangs genannten Art unter anderem dadurch,
- dass ein im Betrieb auf einer ersten Seite des Gegenstands angeordnetes erstes Sensorpaar aus einem ersten Sender und einem ersten Empfänger für Terahertzstrahlung, und ein im Betrieb ebenfalls auf der ersten Seite des Gegenstands angeordnetes zweites Sensorpaar aus einem zweiten Sender und einem zweiten Empfänger für Terahertzstrahlung vorgesehen ist,
- dass der erste Sender im Betrieb Terahertzstrahlung von der ersten Seite in einer ersten Hauptstahlrichtung auf den Gegenstand aussendet und der erste Empfänger von den die Schicht des Gegenstands begrenzenden Grenzflächen reflektierte Terahertzstrahlung des ersten Senders empfängt,
- dass der zweite Sender im Betrieb Terahertzstrahlung von der ersten Seite in einer zweiten Hauptstrahlrichtung, die unter einem Winkel gegenüber der ersten Hauptstrahlrichtung verläuft, auf den Gegenstand aussendet und der zweite Empfänger von den die Schicht des Gegenstands begrenzenden Grenzflächen reflektierte Terahertzstrahlung des zweiten Senders empfängt, und
- dass eine Auswerteeinrichtung vorgesehen ist, an der die von dem ersten Empfänger empfangenen Messsignale und die von dem zweiten Empfänger empfangenen Messsignale anliegen, und die dazu ausgebildet ist, aus den anliegenden Messsignalen auf Grundlage der unterschiedlichen Laufzeiten der von den Grenzflächen der Schicht des Gegenstands reflektierten Terahertzstrahlung des ersten Senders und der unterschiedlichen Laufzeiten der von den Grenzflächen der Schicht des Gegenstands reflektierten Terahertzstrahlung des zweiten Senders den Brechungsindex und/oder die Schichtdicke der Schicht des Gegenstands zu bestimmen.

Für ein Verfahren der eingangs genannten Art löst die Erfindung die Aufgabe unter anderem durch die Schritte:
- von einem auf einer ersten Seite des Gegenstands angeordneten ersten Sender wird Terahertzstrahlung von der ersten Seite in einer ersten Hauptstahlrichtung auf den Gegenstand ausgesendet, und von den die Schicht des Gegenstands begrenzenden Grenzflächen reflektierte Terahertzstrahlung des ersten Senders wird von einem ebenfalls auf der ersten Seite des Gegenstands angeordneten ersten Empfänger empfangen,
- von einem ebenfalls auf der ersten Seite des Gegenstands angeordneten zweiten Sender wird Terahertzstrahlung von der ersten Seite in einer zweiten Hauptstahlrichtung, die unter einem Winkel gegenüber der ersten Hauptstrahlrichtung verläuft, auf den Gegenstand ausgesendet, und von den die Schicht des Gegenstands begrenzenden Grenzflächen reflektierte Terahertzstrahlung des zweiten Senders wird von einem ebenfalls auf der ersten Seite des Gegenstands angeordneten zweiten Empfänger empfangen,
- aus den von dem ersten Empfänger empfangenen Messsignalen und den von dem zweiten Empfänger empfangenen Messsignalen wird auf Grundlage der unterschiedlichen Laufzeiten der von den Grenzflächen der Schicht des Gegenstands reflektierten Terahertzstrahlung des ersten Senders und der unterschiedlichen Laufzeiten der von den Grenzflächen der Schicht des Gegenstands reflektierten Terahertzstrahlung des zweiten Senders der Brechungsindex und/oder die Schichtdicke der Schicht des Gegenstands bestimmt.

Der erfindungsgemäß vermessene Gegenstand kann ein rohrförmiger oder plattenförmiger Gegenstand sein. Er kann in einer Extrusionsvorrichtung hergestellt sein. Die erfindungsgemäße Vorrichtung kann in einer Extrusionslinie zur Herstellung des Gegenstands zum Einsatz kommen. Entsprechend kann das erfindungsgemäße Verfahren in einer Extrusionslinie durchgeführt werden. Die zu vermessende Schicht des Gegenstands ist für Terahertzstrahlung zumindest teiltransparent. Der Gegenstand kann zum Beispiel aus einem Kunststoff bestehen. Der Gegenstand kann auch einen Mehrschichtaufbau aufweisen. Möglich ist auch, dass der Gegenstand eine für die Terahertzstrahlung nicht transparente Schicht, zum Beispiel eine Metallschicht, aufweist, auf der die zu vermessende Schicht, zum Beispiel eine Kunststoffschicht, aufgebracht ist. Mit der erfindungsgemäßen Vorrichtung bzw. dem erfindungsgemäßen Verfahren können der Brechungsindex und/oder die Schichtdicke einer Schicht des Gegenstands bestimmt werden. Bei der Schichtdicke handelt es sich um die geometrische Schichtdicke. Sie ergibt sich bekanntlich aus der mit der Terahertzstrahlung unmittelbar, beispielsweise auf Grundlage von Laufzeitmessungen, messbaren optischen Dicke durch Division durch den Brechungsindex der Schicht des Gegenstands. Die erfindungsgemäß zum Einsatz kommende Terahertzstrahlung kann beispielsweise in einem Frequenzbereich von 1 GHz bis 10 THz liegen.

Das erste Sensorpaar weist einen ersten Sender und einen ersten Empfänger für Terahertzstrahlung auf und befindet sich auf einer ersten Seite des Gegenstands. Ebenfalls auf der ersten Seite des Gegenstands befindet sich das zweite Sensorpaar mit einem zweiten Sender und einem zweiten Empfänger für Terahertzstrahlung. Der erste Sender und der zweite Sender bestrahlen den Gegenstand also von derselben Seite. Ebenfalls von dieser selben Seite empfangen der erste Empfänger und der zweite Empfänger von Grenzflächen der Schicht des Gegenstands reflektierte Terahertzstrahlung. Der zweite Sender und der zweite Empfänger des zweiten Sensorpaars sind synchronisiert. Auch der erste Sender und der erste Empfänger des ersten Sensorpaars sind synchronisiert. Besonders einfach ist dies zu realisieren, wenn das erste Sensorpaar als Transceiver ausgebildet ist, wie unten näher erläutert. Der erste Sender und der erste Empfänger können sich im Wesentlichen am selben Ort befinden. Die von dem ersten Sender und dem zweiten Sender ausgesandte Terahertzstrahlung wird an Grenzflächen der zu vermessenden Schicht des Gegenstands reflektiert. Die der ersten Seite zugewandte Grenzfläche der Schicht ist entsprechend die der Vorrichtung, insbesondere den Sensorpaaren, zugewandte Grenzfläche. Sie bildet eine Vorderseite der Schicht. Die der ersten Seite abgewandte Grenzfläche der zu vermessenden Schicht ist entsprechend die der Vorrichtung, insbesondere den Sensorpaaren, abgewandte Grenzfläche. Sie bildet eine Rückseite der zu vermessenden Schicht. An den Grenzflächen besteht ein Übergang zwischen unterschiedlich optisch dichten Medien. Entsprechend wird die Terahertzstrahlung an diesen Grenzflächen zumindest teilweise reflektiert. Die Grenzflächen können gegenüber Luft oder einem anderen Medium bestehen. Beispielsweise die der ersten Seite zugewandte Grenzfläche kann gegenüber Luft bestehen. Die der ersten Seite abgewandte Grenzfläche kann ebenfalls gegenüber Luft bestehen oder beispielsweise gegenüber einem anderen Medium, das gegebenenfalls auch nicht-transparent für die Terahertzstrahlung sein kann. Die Grenzflächen können eben sein, zum Beispiel wenn der Gegenstand plattenförmig ist, oder gekrümmt, wenn der Gegenstand rohrförmig ist. Im letzteren Fall wird die Terahertzstrahlung durch den ersten und/oder zweiten Sender insbesondere quer, zum Beispiel senkrecht, zur Längsrichtung des Rohrs auf dieses eingestrahlt. Der Gegenstand kann während der Messung durch einen Messbereich der Vorrichtung hindurch gefördert werden, ein rohrförmiger Gegenstand entlang seiner Längsachse. Dies ist insbesondere in Extrusionslinien der Fall, in denen der Gegenstand aus der Extrusionsvorrichtung austritt und weiter mittels einer Fördereinrichtung gefördert wird. Die Vorrichtung kann hierzu eine entsprechende Fördereinrichtung umfassen. Der Gegenstand kann während der erfindungsgemäßen Messung noch eine erhöhte Temperatur aufweisen. Insbesondere kann der Gegenstand noch fließfähige Schmelzeanteile aufweisen.

Der erste Sender sendet Terahertzstrahlung in einer ersten Hauptstrahlrichtung auf den Gegenstand aus. Der zweite Sender sendet Terahertzstrahlung in einer zweiten Hauptstrahlrichtung auf den Gegenstand aus, die gegenüber der ersten Hauptstrahlrichtung unter einem Winkel verläuft. Wie nachfolgend näher erläutert, ist es möglich, dass die erste Hauptstahlrichtung senkrecht zu der der ersten Seite zugewandten Grenzfläche (und gegebenenfalls auch zu der der ersten Seite abgewandten Grenzfläche) der Schicht des Gegenstands verläuft. Die Grenzflächen können parallel ausgebildet sein. Insbesondere die von dem zweiten Sender ausgesandte Terahertzstrahlung tritt also unter einem Einfallswinkel zwischen 0° und 90° in die zu vermessende Schicht des Gegenstands ein. Zumindest der zweite Sender und der zweite Empfänger weisen einen Öffnungswinkel der gesendeten bzw. empfangenen Terahertzstrahlung auf. Die Hauptstrahlrichtung entspricht bei einem Öffnungswinkel der Strahlung dem Mittenstrahl bzw. der Mittenrichtung des ausgesandten Strahlungswinkels bzw. Strahlungskegels. Die von dem ersten und zweiten Empfänger empfangene Terahertzstrahlung wird im Westlichen am selben Ort der ersten Grenzfläche und der zweiten Grenzfläche reflektiert. Insbesondere die von dem zweiten Sender ausgesandte und unter einem Einfallswinkel zwischen 0° und 90° in die Schicht eintretende Terahertzstrahlung erfährt beim Eintritt in und beim Austritt aus dem Gegenstand Brechung. Der an der der ersten Seite zugewandten Grenzfläche (Vorderseite) reflektierte Strahlungsanteil und der an der der ersten Seite abgewandten Grenzfläche (Rückseite) reflektierte, von dem zweiten Empfänger empfangene Strahlungsanteil der von dem zweiten Sender ausgesandten Terahertzstrahlung tritt also an beabstandeten Orten in den Gegenstand ein und aus dem Gegenstand wieder aus.

Die Auswerteeinrichtung erhält die Messsignale des ersten und zweiten Empfängers. Für die erfindungsgemäße Bestimmung des Brechungsindex und/oder der Schichtdicke wird erfindungsgemäß die physikalische Tatsache ausgenutzt, dass die an den Grenzflächen der Schicht reflektierte Terahertzstrahlung des ersten Senders einen ersten Laufzeitunterschied aufweist, und dass die an den Grenzflächen der Schicht reflektierte Terahertzstrahlung des zweiten Senders einen zweiten Laufzeitunterschied aufweist, wobei der erste Laufzeitunterschied sich von dem zweiten Laufzeitunterschied unterscheidet, insbesondere aufgrund der Einstrahlung aus unterschiedlicher Richtung und der Brechung insbesondere der Strahlung des zweiten Senders. Die Auswerteeinrichtung kann für die erfindungsgemäße Auswertung die Laufzeiten und/oder Laufzeitunterschiede der an den Grenzflächen reflektierten Strahlung des ersten Senders und der an den Grenzflächen reflektierten Strahlung des zweiten Senders bestimmen. Es ist aber auch möglich, dass die Laufzeitunterschiede nur indirekt in die Auswertung eingehen, beispielsweise indem nur die Werte der einzelnen Laufzeiten der Strahlungsanteile ausgewertet werden. Auch eine indirekte Berücksichtigung der Laufzeiten bzw. Laufzeitunterschiede, zum Beispiel über eine Frequenzauswertung, ist selbstverständlich möglich.

Wie unten noch näher erläutert, kann die Auswerteeinrichtung beispielsweise anhand einer Laufzeitmessung aus den von dem ersten Empfänger empfangenen Messsignalen eine erste Zeitdifferenz und/oder erste optische Wegdifferenz zwischen der von den Grenzflächen der Schicht reflektierten Terahertzstrahlung des ersten Senders und aus den von dem zweiten Empfänger empfangenen Messsignalen eine zweite Zeitdifferenz und/oder zweite optische Wegdifferenz zwischen der von den Grenzflächen der Schicht reflektierten Terahertzstrahlung des zweiten Senders bestimmen. Die Differenz kann insbesondere aus Laufzeitmessungen der von den Grenzflächen der Schicht reflektierten Terahertzstrahlung des ersten bzw. zweiten Senders bestimmt werden. Wie unten ebenfalls noch näher erläutert, kann durch die Auswerteeinrichtung aus einer ersten bzw. zweiten Zeitdifferenz eine erste bzw. zweite optische Wegdifferenz bestimmt werden. Aufgrund des zweifachen Durchlaufens der zu vermessenden Schicht durch die von dem ersten bzw. zweiten Sender ausgesandte Terahertzstrahlung ergibt die Laufzeitmessung zunächst die doppelte optische Dicke der Schicht. Entsprechend kann der jeweils bestimmte Wert für die Bestimmung der Zeitdifferenz bzw. der optischen Wegdifferenz halbiert werden.

Auf Grundlage der Messsignale des ersten und zweiten Empfängers und der Laufzeitunterschiede zwischen der von den Grenzflächen der Schicht des Gegenstands reflektierten Terahertzstrahlung des ersten Senders bzw. des zweiten Senders bestimmt die Auswerteeinrichtung den Brechungsindex und/oder die (geometrische) Schichtdicke der Schicht des Gegenstands. Die ersten und zweiten Laufzeitunterschiede und damit die ersten bzw. zweiten Zeitdifferenzen oder ersten bzw. zweiten optischen Wegdifferenzen hängen von der geometrischen Schichtdicke und dem Brechungsindex der Schicht ab. Die Abhängigkeiten sind allerdings unterschiedlich, da, wie erläutert, insbesondere die von dem zweiten Sender ausgesandte Terahertzstrahlung Brechung durch die Schicht erfährt. Beispielsweise wenn die erste Hauptstrahlrichtung des ersten Senders senkrecht zu der der ersten Seite zugewandten Grenzfläche der Schicht verläuft, gilt für die Abhängigkeit des ersten Laufzeitunterschieds, insbesondere der gemessenen optischen Dicke, vom Brechungsindex in einfacher Weise, dass sich diese optische Dicke durch Multiplikation der geometrischen Schichtdicke mit dem Brechungsindex ergibt. Der Laufzeitunterschied ergibt sich dann entsprechend durch zusätzliche Division durch die Lichtgeschwindigkeit im Vakuum. Die komplexere Abhängigkeit des zweiten Laufzeitunterschieds der Strahlung des zweiten Senders von dem Brechungsindex und der geometrischen Schichtdicke lässt sich insbesondere bei bekanntem Abstand zwischen dem zweiten Sender und dem zweiten Empfänger unter Berücksichtigung des ersten Laufzeitunterschieds der Strahlung des ersten Senders rechnerisch ermitteln, insbesondere mittels numerischer Rechenverfahren, wie nachfolgend näher erläutert wird. Durch das erfindungsgemäße Ausnutzen beider Zusammenhänge, also der Abhängigkeit der ersten und zweiten Laufzeitunterschiede von der geometrischen Schichtdicke und dem Brechungsindex, ergibt sich eine eindeutige Lösung für einen Brechungsindex und eine Schichtdicke der Schicht, die die Abhängigkeitsbedingungen sowohl für den ersten als auch für den zweiten Laufzeitunterschied erfüllt. Das so ermittelte Paar aus Brechungsindex und (geometrischer) Schichtdicke wird entsprechend als Brechungsindex und/oder Schichtdicke der Schicht des Gegenstands bestimmt.

Mit der erfindungsgemäßen Vorrichtung bzw. dem erfindungsgemäßen Verfahren kann in zuverlässiger Weise mit nur einer Terahertzmessvorrichtung der Brechungsindex einer Schicht zusätzlich zu deren Schichtdicke gemessen werden. Dabei ist ein Zugang zu dem Gegenstand nur von einer Seite der zu messenden Schicht ausreichend. Eine Anordnung von Komponenten der Messvorrichtung auf gegenüberliegenden Seiten des Gegenstands ist nicht erforderlich. Die erfindungsgemäße Vorrichtung befindet sich im Betrieb entsprechend nur auf einer Seite des Gegenstands. Insbesondere ist es nicht erforderlich, auf der gegenüberliegenden Seite einen Reflektor oder einen Empfänger für Terahertzstrahlung anzuordnen. Somit eignen sich die erfindungsgemäße Vorrichtung und das erfindungsgemäße Verfahren in besonderer Weise auch für Proben, die nur von einer Seite zugänglich sind. Dies gilt auch für die Messung von Schichten, die sich auf für Terahertzstrahlung intransparenten Schichten befinden, zum Beispiel Kunststoffbeschichtungen auf Metallrohren.

Wie bereits erwähnt, kann die erste Hauptstrahlrichtung im Betrieb senkrecht zu der der ersten Seite zugewandte Grenzfläche der Schicht des Gegenstands verlaufen. Es besteht dann ein lotrechter Einfall der von dem ersten Sender ausgesandten Terahertzstrahlung, insbesondere der Hauptstrahlrichtung, auf den Gegenstand. Dies vereinfacht die erfindungsgemäße Auswertung erheblich, da zwischen dem gemessenen Laufzeitunterschied bzw. der gemessenen Zeit- bzw. Wegdifferenz und der geometrischen Schichtdicke ein besonders einfacher Zusammenhang über den Brechungsindex besteht.

Gemäß einer besonders praxisgemäßen Ausgestaltung kann, wie ebenfalls bereits erwähnt, das erste Sensorpaar durch einen Transceiver, umfassend den ersten Sender und den ersten Empfänger, gebildet sein.

Der zweite Sender und der zweite Empfänger können nach einer weiteren Ausgestaltung auf gegenüberliegenden Seiten des ersten Sensorpaars, insbesondere des Transceivers, angeordnet sein. Dabei können der zweite Sender und der zweite Empfänger den gleichen Abstand zu dem ersten Sensorpaar, insbesondere dem Transceiver, aufweisen. Durch diese symmetrische Anordnung des zweiten Sensorpaars in Bezug auf das erste betrachten beide Sensorpaare näherungsweise die gleiche Stelle der zu messenden Schicht, sofern die Sensoren parallel zur Oberfläche der zu messenden Schicht angeordnet sind. Dabei bilden dann das erste Sensorpaar bzw. der Transceiver mit dem zweiten Sender bzw. zweiten Empfänger und dem gemeinsamen Auftreffpunkt der von dem ersten und zweiten Sender ausgesandten Terahertzstrahlung auf die der ersten Seite zugewandte Grenzfläche der Schicht jeweils ein rechtwinkliges Dreieck.

Nach einer weiteren Ausgestaltung kann vorgesehen sein, dass die Auswerteeinrichtung dazu ausgebildet ist, zur Überprüfung der Ausrichtung der Vorrichtung zu dem Gegenstand im Betrieb zu prüfen, ob die Summe aus dem Quadrat des Abstands zwischen Transceiver und zweitem Sender oder Empfänger und dem Quadrat des Abstands des Transceivers von der der ersten Seite zugewandten Grenzfläche der Schicht des Gegenstands gleich dem Quadrat des Abstands des zweiten Senders oder Empfängers von dem Auftreffort der Terahertzstrahlung des ersten Senders auf der der ersten Seite zugewandten Grenzfläche der Schicht des Gegenstands ist. Insbesondere können der erste Sender, der erste Empfänger, der zweite Sender und der zweite Empfänger in einer Ebene, insbesondere entlang einer Geraden in der Ebene, angeordnet sein, die im Betrieb parallel zu einer der ersten Seite zugewandten Grenzfläche des Gegenstands angeordnet ist. Die Gerade kann zum Beispiel senkrecht zu einer Längsrichtung eines rohrförmigen Gegenstands verlaufen. Wie erläutert, kann sichergestellt werden, dass mit beiden Sensorpaaren die gleiche Stelle betrachtet wird, wenn der Transceiver mit dem zweiten Sender bzw. dem zweiten Empfänger und dem Auftreffort der von dem Transceiver bzw. dem zweiten Sender ausgesandten Terahertzstrahlung auf der der ersten Seite zugewandten Grenzfläche ein rechtwinkliges Dreieck bilden. Dies wird bei der vorgenannten Ausgestaltung überprüft. Für die Überprüfung wird zugrunde gelegt, dass die Abstände zwischen den Sensorpaaren bzw. den Sendern und Empfängern bekannt sind. Der Abstand insbesondere zwischen dem Transceiver und der der ersten Seite zugewandten Grenzfläche des Gegenstands kann durch eine einfache Laufzeitmessung der Terahertzstrahlung gemessen werden. Die Ausrichtung der Probe kann dann durch die Anwendung des Satz des Pythagoras auf ein rechtwinkliges Dreieck in der oben erläuterten Weise überprüft werden.

Die Auswerteeinrichtung ist erfindungsgemäß dazu ausgebildet, aus den von dem ersten Empfänger empfangenen Messsignalen eine bestimmte erste Zeitdifferenz und/oder erste optische Wegdifferenz zwischen der von den Grenzflächen der Schicht des Gegenstands reflektierten Terahertzstrahlung des ersten Senders zu bestimmen, und aus den von dem zweiten Empfänger empfangenen Messsignalen eine bestimmte zweite Zeitdifferenz und/oder zweite optische Wegdifferenz zwischen der von den Grenzflächen der Schicht des Gegenstands reflektierten Terahertzstrahlung des zweiten Senders zu bestimmen. Die bestimmte bzw. gemessene Zeitdifferenz und damit auch die bestimmte bzw. gemessene optische Wegdifferenz kann selbstverständlich auch indirekt bzw. implizit bestimmt werden, indem nur die Laufzeiten der von den Grenzflächen der Schicht reflektierten Terahertzstrahlung des ersten bzw. zweiten Senders bestimmt und rechnerisch weiterverarbeitet werden. Auch eine indirekte Bestimmung der Zeitdifferenz im Fourier-Raum ist selbstverständlich möglich. Die optische Wegdifferenz kann bekanntlich aus der Zeitdifferenz bestimmt werden, und umgekehrt, insbesondere durch Multiplikation bzw. Division durch die Lichtgeschwindigkeit im Vakuum.

Erfindungsgemäß ist die Auswerteeinrichtung weiter dazu ausgebildet, zu der bestimmten ersten Zeitdifferenz und/oder ersten optischen Wegdifferenz passende Kombinationen von möglichen Brechungsindexwerten und möglichen Schichtdickenwerten der Schicht des Gegenstands zu ermitteln, aus den ermittelten Kombinationen eine zur bestimmten zweiten Zeitdifferenz und/oder bestimmten zweiten optischen Wegdifferenz passende Kombination zu bestimmen, und diese bestimmte passende Kombination des Brechungsindexwerts und des Schichtdickenwerts als Brechungsindex und Schichtdicke der Schicht des Gegenstands zu bestimmen und/oder dass die Auswerteeinrichtung weiter dazu ausgebildet ist, zu der bestimmten zweiten Zeitdifferenz und/oder zweiten optischen Wegdifferenz passende Kombinationen von möglichen Brechungsindexwerten und möglichen Schichtdickenwerten der Schicht des Gegenstands zu ermitteln, aus den ermittelten Kombinationen eine zur bestimmten ersten Zeitdifferenz und/oder ersten optischen Wegdifferenz passende Kombination zu bestimmen, und diese bestimmte passende Kombination des Brechungsindexwerts und des Schichtdickenwerts als Brechungsindex und Schichtdicke der Schicht des Gegenstands zu bestimmen. Weiterhin kann vorgesehen sein, dass die Auswerteeinrichtung dazu ausgebildet ist, anhand der zu der bestimmten ersten Zeitdifferenz und/oder ersten optischen Wegdifferenz ermittelten Kombinationen von möglichen Brechungsindexwerten und von möglichen Schichtdickenwerten eine berechnete zweite Zeitdifferenz und/oder zweite optische Wegdifferenz zu berechnen, diese mit der bestimmten zweiten Zeitdifferenz und/oder zweiten optischen Wegdifferenz zu vergleichen und die Kombination von Brechungsindexwert und von Schichtdickenwert als Brechungsindex und Schichtdicke der Schicht des Gegenstands zu bestimmen, bei der bestimmte und berechnete zweite Zeitdifferenz und/oder zweite optische Wegdifferenz übereinstimmen und/oder dass die Auswerteeinrichtung dazu ausgebildet ist, anhand der zu der bestimmten zweiten Zeitdifferenz und/oder zweiten optischen Wegdifferenz ermittelten Kombinationen von möglichen Brechungsindexwerten und von möglichen Schichtdickenwerten eine berechnete erste Zeitdifferenz und/oder erste optische Wegdifferenz zu berechnen, diese mit der bestimmten ersten Zeitdifferenz und/oder bestimmten ersten optischen Wegdifferenz zu vergleichen und die Kombination von Brechungsindexwert und von Schichtdickenwert als Brechungsindex und Schichtdicke der Schicht des Gegenstands zu bestimmen, bei der bestimmte und berechnete erste Zeitdifferenz und/oder optische Wegdifferenz übereinstimmen.

Den vorgenannten Ausgestaltungen liegt die Erkenntnis zugrunde, dass es zu den bestimmten ersten und zweiten Zeit- bzw. optischen Wegdifferenzen genau ein Lösungspaar aus einem Brechungsindexwert und einem Schichtdickenwert gibt, aus dem sich rechnerisch sowohl die erste bestimmte Zeit- bzw. optische Wegdifferenz als auch die zweite bestimmte Zeit- bzw. optische Wegdifferenz ergeben. Gemäß den vorgenannten Ausgestaltungen wird dieses Lösungspaar aus Brechungsindexwert und Schichtdickenwert identifiziert und als Brechungsindex und/oder Schichtdicke der Schicht des Gegenstands bestimmt.

Die aus einer Zeitdifferenz und/oder optischen Wegdifferenz bestimmten Schichtdickenwerte sind mögliche Werte für die Schichtdicke der Schicht des Gegenstands. Entsprechend sind die Brechungsindexwerte mögliche Werte für den Brechungsindex der Schicht des Gegenstands. Aufgrund der vergleichsweise einfachen rechnerischen Abhängigkeit kann in einfacher Weise zu der bestimmten ersten Zeitdifferenz bzw. optischen Wegdifferenz durch Variieren der Brechungsindexwerte eine Schar möglicher Schichtdickenwerte zu den Brechungsindexwerten berechnet werden. Aus dieser Schar von möglichen Lösungskombinationen aus Brechungsindexwert und Schichtdickenwert kann dann rechnerisch, insbesondere in einem numerischen Rechenverfahren, das Lösungspaar identifiziert werden, das zu der bestimmten zweiten Zeitdifferenz bzw. optischen Wegdifferenz führt. So lässt sich jedem möglichen Lösungspaar des Brechungsindexwerts und des Schichtdickenwerts aus der Schar der Lösungspaare grundsätzlich eine berechnete zweite Zeitdifferenz bzw. optische Wegdifferenz zuordnen, die sich mit der bestimmten zweiten Zeitdifferenz bzw. optischen Wegdifferenz vergleichen lässt. Durch ein numerisches Variieren zum Beispiel des Brechungsindexwerts kann somit das Lösungspaar gefunden werden, bei dem die bestimmte zweite Zeitdifferenz bzw. optische Wegdifferenz und die berechnete zweite Zeitdifferenz bzw. optische Wegdifferenz übereinstimmen. Dabei muss nicht zwingend für jedes Paar aus der ermittelten Schar von Brechungsindexwerten und Schichtdickenwerten eine entsprechende zweite Zeitdifferenz bzw. optische Wegdifferenz berechnet werden. Es können auch andere rechnerische Ansätze zum Einsatz kommen, zum Beispiel eine Nullstellensuche bezüglich der Differenz zwischen der bestimmten zweiten Zeitdifferenz bzw. optischen Wegdifferenz und der berechneten zweiten Zeitdifferenz bzw. optischen Wegdifferenz, beispielsweise mittels Newtonverfahren. Natürlich kann auch zu der bestimmten zweiten Zeitdifferenz bzw. optischen Wegdifferenz durch Variieren der Brechungsindexwerte eine Schar möglicher Schichtdickenwerte zu den Brechungsindexwerten berechnet werden. Aus dieser Schar von möglichen Lösungskombinationen aus Brechungsindexwert und Schichtdickenwert kann dann rechnerisch, insbesondere in einem numerischen Rechenverfahren, das Lösungspaar identifiziert werden, das zu der bestimmten ersten Zeitdifferenz bzw. optischen Wegdifferenz führt.

Nach einer weiteren Ausgestaltung kann die Auswerteeinrichtung dazu ausgebildet sein, die möglichen Schichtdickenwerte jeweils aus dem Quotienten aus der bestimmten ersten Zeitdifferenz multipliziert mit der Lichtgeschwindigkeit im Vakuum bzw. der bestimmten ersten optischen Wegdifferenz und einem möglichen Brechungsindexwert zu berechnen. Dieser relativ einfache Zusammenhang zwischen der ersten Zeitdifferenz bzw. optischen Wegdifferenz und der Schichtdicke wurde eingangs erläutert. Der Brechungsindexwert kann variiert werden, so dass eine Schar von möglichen Lösungspaaren für den Brechungsindexwert und den Schichtdickenwert ermittelt werden können.

Die Auswerteeinrichtung kann weiter dazu ausgebildet sein, die berechnete zweite und/oder erste Zeitdifferenz bzw. optische Wegdifferenz numerisch aus einem möglichen Brechungsindexwert und einem möglichen Schichtdickenwert, also aus jeweils einer Kombination aus den ermittelten Kombinationen von möglichen Brechungsindexwerten und von möglichen Schichtdickenwerten zu berechnen, wie ebenfalls bereits erläutert. Die Berechnung der zweiten und/oder ersten Zeitdifferenz bzw. optischen Wegdifferenz lässt sich beispielsweise numerisch als Minimumsuche gestalten.

Weiterhin kann die Auswerteeinrichtung dazu ausgebildet sein, insbesondere bei der Berechnung, insbesondere der numerischen Berechnung, weiterhin den Abstand des Transceivers von der der ersten Seite zugewandten Grenzfläche der Schicht des Gegenstands und den Abstand des zweiten Senders oder Empfängers von dem Transceiver zu berücksichtigen. Auch kann die Auswerteeinrichtung dazu ausgebildet sein, zur numerischen Berechnung ein Minimum einer Funktion durch Variieren eines den Brechungswinkel der von dem zweiten Sender auf den Gegenstand ausgesandten Terahertzstrahlung beim Eintritt in die Schicht des Gegenstands charakterisierenden Parameters zu bestimmen. Dabei wird ausgenutzt, dass die Brechung an ebenen Grenzflächen stets so erfolgt, dass der optische Weg minimal ist. Die Auswerteeinrichtung kann weiterhin dazu ausgebildet sein, die zweite optische Wegdifferenz numerisch als Minimum der nachfolgenden Funktion zu bestimmen: $f \left(n, d, B\right) = \sqrt{{t}_{1}^{2} + {\left(A-B\right)}^{2}} + n \sqrt{{d}^{2} + {B}^{2}} - \sqrt{{t}_{1}^{2} + {A}^{2}}$ mit:
*t*₁ : Abstand des Transceivers von der der ersten Seite zugewandten Grenzfläche der Schicht des Gegenstands,
*A*: Abstand des zweiten Senders oder Empfängers von dem Transceiver,
*n*: Möglicher Brechungsindexwert des Gegenstands,
*d:* Möglicher Schichtdickenwert der Schicht des Gegenstands,
*B*: Veränderliche Variable zum Finden des Minimums, insbesondere ein den Brechungswinkel der von dem zweiten Sender ausgesandten Terahertzstrahlung beim Eintritt in die Schicht charakterisierender Parameter.

Es wird darauf hingewiesen, dass es vorteilhaft sein kann, eine nachträgliche Korrektur der Ergebnisse der Auswerteeinrichtung durchzuführen um beispielsweise auszugleichen, dass die Sender und Empfänger nicht punktförmig sind oder deren Anordnung nicht perfekt ist. Dies könnte über eine entsprechende Kalibrierung erfolgen.

Nach einer weiteren Ausgestaltung kann der Winkel zwischen der ersten und zweiten Hauptstrahlrichtung mehr als 5°, vorzugsweise mehr als 10°, weiter vorzugsweise mehr als 30°, betragen. Ein größerer Winkel zwischen den Hauptstrahlrichtungen erleichtert die Auswertung, da die Laufzeitunterschiede der Strahlung des ersten bzw. zweiten Senders dann stärker variieren.

Gemäß einer weiteren Ausgestaltung kann die Vorrichtung eine tragbare Handheld-Vorrichtung sein. Sie kann also von einer Bedienperson in einfacher Weise gehalten werden und am Messort zum Einsatz kommen. Die Erfindung eignet sich besonders für eine kompakte Bauform, so dass die Vorrichtung in einfacher Weise als Handheldgerät eingesetzt werden kann. Wie erläutert, kann anders als im Stand der Technik auf einen Reflektor hinter dem zu messenden Gegenstand verzichtet werden.

Die Vorrichtung kann weiterhin den Gegenstand umfassen. Die Erfindung betrifft auch ein System, umfassend die erfindungsgemäße Vorrichtung und den Gegenstand. Das System kann auch eine Extrusionsvorrichtung zum Herstellen des Gegenstands umfassen sowie gegebenenfalls eine Fördereinrichtung zum Fördern des Gegenstands.

Das erfindungsgemäße Verfahren kann mit einer erfindungsgemäßen Vorrichtung durchgeführt werden. Insbesondere können bei dem Verfahren die Schritte ausgeführt werden, zu denen die Auswerteeinrichtung der erfindungsgemäßen Vorrichtung ausgebildet ist. Auch umgekehrt kann die erfindungsgemäße Vorrichtung zur Ausbildung des erfindungsgemäßen Verfahrens ausgebildet sein.

Ein Ausführungsbeispiel der Erfindung wird nachfolgend anhand von Figuren näher erläutert. Es zeigt schematisch:
- Figur 1: eine erfindungsgemäße Vorrichtung in einer Seitenansicht,
- Figur 2: ein Diagramm zur Veranschaulichung des Ermittelns eines Lösungspaares aus Brechungsindexwert und Schichtdickenwert, und
- Figur 3: ein weiteres Diagramm zur Veranschaulichung des Ermittelns eines Lösungspaares aus Brechungsindexwert und Schichtdickenwert.

Soweit nichts anderes angegeben ist, bezeichnen in den Figuren gleiche Bezugszeichen gleiche Gegenstände.

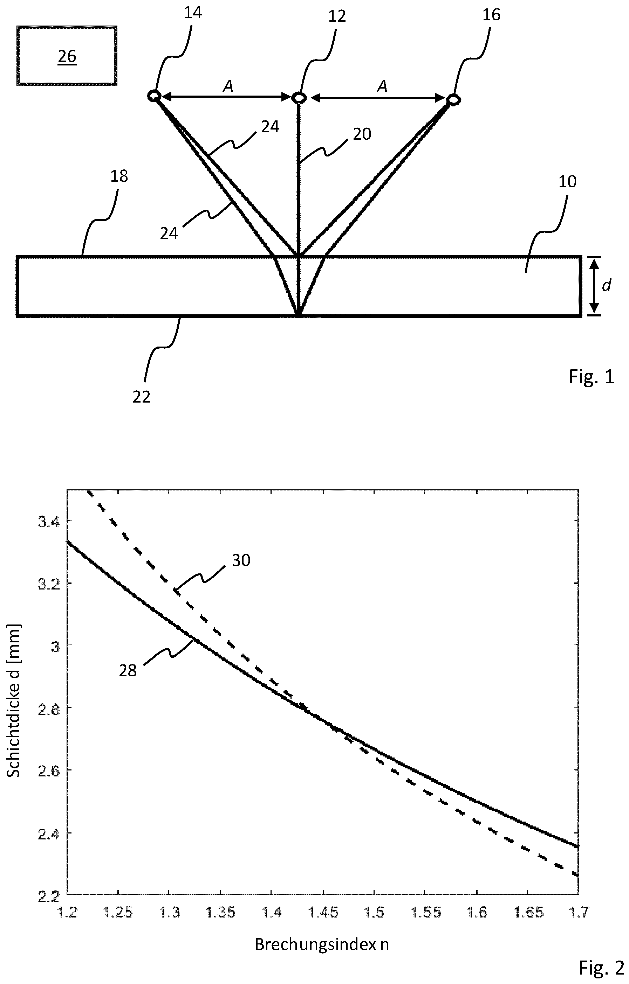

In Figur 1 ist sehr schematisch ein Gegenstand 10 dargestellt, dessen Schichtdicke gemessen werden soll. Bei dem Gegenstand 10 kann es sich zum Beispiel um einen Kunststoffgegenstand handeln, der zum Beispiel rohrförmig oder plattenförmig ausgebildet sein kann. Er kann in einer Extrusionsvorrichtung hergestellt sein und mittels einer Fördereinrichtung durch einen Messbereich der erfindungsgemäßen Vorrichtung gefördert werden. Es ist auch möglich, dass der Gegenstand 10 zum Zeitpunkt der Messung noch eine erhöhte Temperatur hat, zum Beispiel noch nicht vollständig erstarrte Anteile aufweist. Zum Messen der Schichtdicke der Schicht des Gegenstands 10 weist die erfindungsgemäße Vorrichtung einen ein erstes Sensorpaar mit einem ersten Sender und einem ersten Empfänger für Terahertzstrahlung bildenden Transceiver 12 auf sowie ein zweites Sensorpaar, umfassend einen zweiten Sender 14 und zweiten Empfänger 16 für Terahertzstrahlung. In dem dargestellten Beispiel sind der zweite Sender 14 und der zweite Empfänger 16 auf gegenüberliegenden Seiten und im gleichen Abstand A zu dem Transceiver 12 angeordnet. Transceiver 12 sowie zweiter Sender 14 und zweiter Empfänger 16 sind außerdem entlang einer Geraden in einer Ebene auf einer ersten Seite des Gegenstands 10 angeordnet, die parallel zu der der ersten Seite zugewandten Grenzfläche 18 der Schicht des Gegenstands 10 liegt. Der erste Sender des Transceivers 12 sendet im Betrieb Terahertzstrahlung 20 auf den Gegenstand 10 aus, der für diese zumindest teiltransparent ist. Die Terahertzstrahlung 20 wird entsprechend an der der ersten Seite zugewandten Grenzfläche 18 und an der der ersten Seite abgewandten Grenzfläche 22 der zu messenden Schicht des Gegenstands 10 reflektiert und gelangt zurück zu dem Transceiver 12, wo sie von dem ersten Empfänger als Messsignale gemessen wird. Wie in Figur 1 zu erkennen, sendet der erste Sender des Transceivers 12 die Terahertzstrahlung in einer ersten Hauptstrahlrichtung auf den Gegenstand 10 aus, die senkrecht zu der Grenzfläche 18 der Schicht des Gegenstands 10 sowie der hierzu parallelen Grenzfläche 22 verläuft. Der zweite Sender 14 sendet unter einem Öffnungswinkel und entlang einer zweiten Hauptstrahlrichtung, die unter einem Winkel zu der ersten Hauptstrahlrichtung des Transceivers 12 verläuft, ebenfalls Terahertzstrahlung 24 auf den Gegenstand 10 aus. Die in Figur 1 dargestellten Teilstrahlen der Terahertzstrahlung 24 treffen beabstandet auf der Grenzfläche 18 auf. Einer der Teilstrahlen trifft im Wesentlichen am selben Ort auf die Grenzfläche 18 auf, wie die vom Transceiver 12 ausgesandte Terahertzstrahlung 20. Nach Reflexion an der Grenzfläche 18 gelangt dieser Anteil der Terahertzstrahlung 24 unter gleichem Ausfallwinkel wie dem Einfallswinkel zu dem zweiten Empfänger 16, von dem sie entsprechend als Messsignale empfangen wird. Der zweite in Figur 1 dargestellte Teilstrahl der Terahertzstrahlung 24 wird nach Erfahren einer Brechung beim Eintritt in die Schicht des Gegenstands 10 an der Grenzfläche 22 reflektiert, nämlich im Wesentlichen am selben Ort wie die Terahertzstrahlung 20 des Transceivers 12. Nach Reflexion und erneuter Brechung beim Austritt aus der Schicht des Gegenstands 10 gelangt dieser Strahlungsanteil der Terahertzstrahlung 24 ebenfalls zu dem zweiten Empfänger 16 und wird von diesen wiederum als Messsignale empfangen.

Die Messsignale des ersten Empfängers und des zweiten Empfängers 16 werden an eine Auswerteeinrichtung 26 der erfindungsgemäßen Vorrichtung weitergeleitet. Die Auswerteeinrichtung ermittelt aus den von dem ersten Empfänger empfangenen Messsignalen eine bestimmte erste optische Wegdifferenz zwischen der von den Grenzflächen 18, 22 der Schicht des Gegenstands 10 reflektierten Terahertzstrahlung des ersten Senders und aus den von dem zweiten Empfänger 16 empfangenen Messsignalen eine bestimmte zweite optische Wegdifferenz zwischen der von den Grenzflächen 18, 22 der Schicht des Gegenstands 10 reflektierten Terahertzstrahlung des zweiten Senders. Mit Bezug auf die Terahertzstrahlung 20 des ersten Senders wird also insbesondere die optische Wegdifferenz zwischen der an der Grenzfläche 18 reflektierten Terahertzstrahlung und der an der Grenzfläche 22 reflektierten Terahertzstrahlung und damit die optische Dicke der Schicht des Gegenstands 10 bestimmt. Hinsichtlich der Terahertzstrahlung 24 des zweiten Senders 14 wird insbesondere die optische Wegdifferenz zwischen den in Figur 1 dargestellten Teilstrahlen der Terahertzstrahlung 24 bestimmt.

Wie in Figur 1 zu erkennen, bildet der Transceiver 12 gemeinsam mit dem zweiten Sender 14 und dem Auftreffpunkt der Terahertzstrahlung 20 auf der Grenzfläche 18 ein rechtwinkliges Dreieck. Entsprechend bildet auch der zweite Empfänger 16 mit dem Transceiver 12 und dem Auftreffpunkt der Terahertzstrahlung 20 auf der Grenzfläche 18 ein rechtwinkliges Dreieck. Diese Ausrichtung kann durch die Auswerteeinrichtung überprüft werden, indem diese prüft, ob die Summe aus dem Quadrat des Abstands A zwischen dem Transceiver 12 und dem zweiten Sender 14 bzw. dem zweiten Empfänger 16 und dem Quadrat des Abstands des Transceivers 12 von der Grenzfläche 18 gleich ist zu dem Quadrat des Abstands des zweiten Senders 14 oder des zweiten Empfängers 16 von dem Auftreffort der Terahertzstrahlung 20 des ersten Senders auf der Grenzfläche 18.

Wie erläutert, hängen sowohl die erste optische Wegdifferenz als auch die zweite optische Wegdifferenz von der (geometrischen) Schichtdicke *d* der Schicht des Gegenstands 10 und dem Brechungsindex n der Schicht des Gegenstands 10 ab, wobei die Abhängigkeiten unterschiedlich sind, da bei der Terahertzstrahlung 24 des zweiten Senders 14 Brechung auftritt, wie in Figur 1 zu erkennen. Für die erste optische Wegdifferenz gilt in einfacher Weise, dass sich diese aus der Schichtdicke *d* multipliziert mit dem Brechungsindex n ergibt. Die Abhängigkeit der zweiten optischen Wegdifferenz lässt sich bei bekanntem Abstand A und bestimmtem Abstand des Transceivers 12 von der Grenzfläche 18 numerisch berechnen. Werden beide Zusammenhänge ausgenutzt, ergibt sich eine eindeutige Lösung für den Brechungsindex *n* und die Schichtdicke *d,* die sowohl zu der ersten optischen Wegdifferenz als auch zu der zweiten optischen Wegdifferenz führt.

In Figur 2 ist dies anhand eines Beispiels veranschaulicht. Beispielhaft wurde für den Abstand A ein Wert von 50 mm angenommen. Der Abstand zwischen dem Transceiver 12 und der Grenzfläche 18 wurde ebenfalls als 50 mm angenommen. Die erste optische Wegdifferenz wurde mit 4 mm angenommen und die zweite optische Wegdifferenz mit 3,5 mm. Aus dem Zusammenhang, dass sich die erste optische Wegdifferenz aus dem Produkt der Schichtdicke *d* mit dem Brechungsindex *n* ergibt, ergibt sich für eine Schar möglicher Brechungsindexwerte, die in Figur 2 auf der X-Achse aufgetragen ist, die in Figur 2 durchgezogen gezeichnete Kurve 28. Auf der Y-Achse sind die sich zu den Brechungsindexwerten rechnerisch ergebenden Schichtdickenwerte aufgetragen. Die Kurve 28 zeigt entsprechend mögliche Lösungskombinationen für die Schichtdicke *d* und dem Brechungsindex *n.* Aus dem komplexeren Zusammenhang für die zweite optische Wegdifferenz ergibt sich in Figur 2 rechnerisch entsprechend die gestrichelt dargestellte Kurve 30. Der Schnittpunkt der Kurven 28, 30 ergibt die eindeutig zutreffende Lösung für den Brechungsindex *n* und die Schichtdicke *d* der Schicht des Gegenstands 10.

Grundsätzlich lässt sich jedem der gemäß der Kurve 28 dargestellten möglichen Lösungspaare aus Brechungsindex *n* und Schichtdicke *d* eine berechnete zweite optische Wegdifferenz zuordnen, die sich mit der bestimmten zweiten optischen Wegdifferenz vergleichen lässt. Der Brechungsindex n kann entsprechend numerisch variiert werden, um den Brechungsindex n zu finden, bei dem die bestimmte und die berechnete zweite optische Wegdifferenz übereinstimmen.

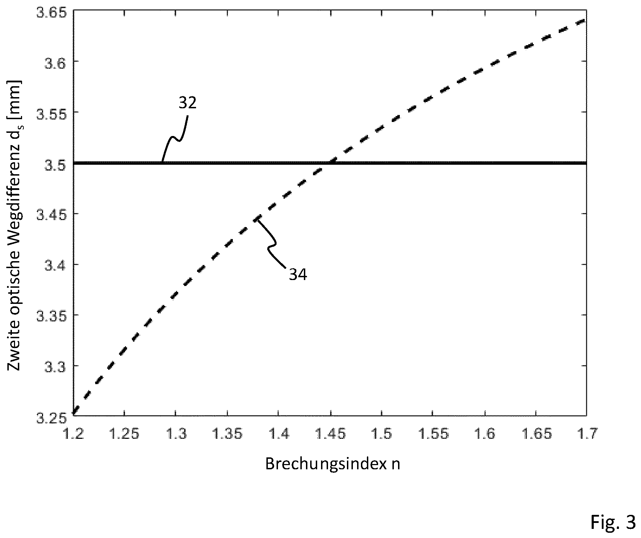

In Figur 3 ist dieser Zusammenhang für das oben genannte Beispiel dargestellt. Es wird derselbe Sachverhalt wie in Figur 2 nur in anderer Form dargestellt, wobei auf der X-Achse wiederum mögliche Brechungsindexwerte n aufgetragen sind. Auf der Y-Achse ist die zweite optische Wegdifferenz *dₛ* aufgetragen, wobei die in Figur 3 durchgezogen dargestellte Kurve 32 die bestimmte zweite optische Wegdifferenz *dₛ* zeigt. Die gestrichelte Kurve 34 zeigt die sich für die Schar von möglichen Brechungsindexwerten n jeweils rechnerisch ergebenden zweiten optischen Wegdifferenzen. Der Schnittpunkt der Kurven 32 und 34 zeigt den zutreffenden Brechungsindex *n* an und die Schichtdicke *d* ergibt sich aus dem Quotienten der ersten optischen Wegdifferenz und des zutreffenden Brechungsindex.

Die Berechnung der zweiten optischen Wegdifferenz *dₛ* lässt sich beispielsweise numerisch als Minimumsuche gestalten. So ist die zweite optische Wegdifferenz *dₛ* das Minimum der nachfolgenden Funktion: $f \left(n, d, B\right) = \sqrt{{t}_{1}^{2} + {\left(A-B\right)}^{2}} + n \sqrt{{d}^{2} + {B}^{2}} - \sqrt{{t}_{1}^{2} + {A}^{2}} ,$ mit:
- *t*₁ :: Abstand des Transceivers von der der ersten Seite zugewandten Grenzfläche der Schicht des Gegenstands,
- *A*:: Abstand des zweiten Senders oder Empfängers von dem Transceiver,
- n:: Möglicher Brechungsindexwert des Gegenstands,
- *d:*: Möglicher Schichtdickenwert der Schicht des Gegenstands,
- *B*:: Veränderliche Variable zum Finden des Minimums, insbesondere ein den Brechungswinkel der von dem zweiten Sender ausgesandten Terahertzstrahlung beim Eintritt in die Schicht charakterisierender Parameter.

Dabei wird B variiert zum Finden des Minimums der Funktion. Dieses Minimum ergibt die berechnete zweite optische Wegdifferenz, die dann mit der gemessenen optischen Wegdifferenz in der erläuterten Weise verglichen werden kann.

### Bezugszeichenliste

- 10: Gegenstand
- 12: Transceiver
- 14: zweiter Sender
- 16: zweiter Empfänger
- 18: Grenzfläche
- 20: Terahertzstrahlung
- 22: Grenzfläche
- 24: Terahertzstrahlung
- 26: Auswerteeinrichtung
- 28: Kurve
- 30: Kurve
- 32: Kurve
- 34: Kurve

## Patentansprüche

1. Vorrichtung zum Bestimmen des Brechungsindex und/oder der Schichtdicke einer Schicht eines Gegenstands (10), **dadurch gekennzeichnet,**
• **dass** ein im Betrieb auf einer ersten Seite des Gegenstands (10) angeordnetes erstes Sensorpaar aus einem ersten Sender und einem ersten Empfänger für Terahertzstrahlung (20), und ein im Betrieb ebenfalls auf der ersten Seite des Gegenstands (10) angeordnetes zweites Sensorpaar aus einem zweiten Sender (14) und einem zweiten Empfänger (16) für Terahertzstrahlung (24) vorgesehen ist,
• **dass** der erste Sender im Betrieb Terahertzstrahlung (20) von der ersten Seite in einer ersten Hauptstrahlrichtung auf den Gegenstand (10) aussendet und der erste Empfänger von den die Schicht des Gegenstands (10) begrenzenden Grenzflächen reflektierte Terahertzstrahlung (20) des ersten Senders empfängt,
• **dass** der zweite Sender (14) im Betrieb Terahertzstrahlung (24) von der ersten Seite in einer zweiten Hauptstrahlrichtung, die unter einem Winkel gegenüber der ersten Hauptstrahlrichtung verläuft, auf den Gegenstand (10) aussendet und der zweite Empfänger (16) von den die Schicht des Gegenstands (10) begrenzenden Grenzflächen reflektierte Terahertzstrahlung (24) des zweiten Senders (14) empfängt, und
• **dass** eine Auswerteeinrichtung (26) vorgesehen ist, an der die von dem ersten Empfänger empfangenen Messsignale und die von dem zweiten Empfänger (16) empfangenen Messsignale anliegen, und die dazu ausgebildet ist, aus den anliegenden Messsignalen auf Grundlage der unterschiedlichen Laufzeiten der von den Grenzflächen (18, 22) der Schicht des Gegenstands (10) reflektierten Terahertzstrahlung (20) des ersten Senders und der unterschiedlichen Laufzeiten der von den Grenzflächen (18, 22) der Schicht des Gegenstands (10) reflektierten Terahertzstrahlung (20) des zweiten Senders (14) den Brechungsindex und/oder die Schichtdicke der Schicht des Gegenstands (10) zu bestimmen,
• wobei die Auswerteeinrichtung (26) dazu ausgebildet ist, aus den von dem ersten Empfänger empfangenen Messsignalen eine erste Zeitdifferenz und/oder erste optische Wegdifferenz zwischen der von den Grenzflächen (18, 22) der Schicht des Gegenstands (10) reflektierten Terahertzstrahlung (20) des ersten Senders zu bestimmen, und aus den von dem zweiten Empfänger (16) empfangenen Messsignalen eine zweite Zeitdifferenz und/oder zweite optische Wegdifferenz zwischen der von den Grenzflächen (18, 22) der Schicht des Gegenstands (10) reflektierten Terahertzstrahlung (24) des zweiten Senders (14) zu bestimmen, und
• wobei die Auswerteeinrichtung (26) weiter dazu ausgebildet ist, zu der bestimmten ersten Zeitdifferenz und/oder ersten optischen Wegdifferenz passende Kombinationen von möglichen Brechungsindexwerten und möglichen Schichtdickenwerten der Schicht des Gegenstands (10) zu ermitteln, aus den ermittelten Kombinationen eine zur bestimmten zweiten Zeitdifferenz und/oder zweiten optischen Wegdifferenz passende Kombination zu bestimmen, und diese bestimmte passende Kombination des Brechungsindexwerts und des Schichtdickenwerts als Brechungsindex und Schichtdicke der Schicht des Gegenstands (10) zu bestimmen und/oder dass die Auswerteeinrichtung (26) weiter dazu ausgebildet ist, zu der bestimmten zweiten Zeitdifferenz und/oder zweiten optischen Wegdifferenz passende Kombinationen von möglichen Brechungsindexwerten und möglichen Schichtdickenwerten der Schicht des Gegenstands (10) zu ermitteln, aus den ermittelten Kombinationen eine zur bestimmten ersten Zeitdifferenz und/oder ersten optischen Wegdifferenz passende Kombination zu bestimmen, und diese bestimmte passende Kombination des Brechungsindexwerts und des Schichtdickenwerts als Brechungsindex und Schichtdicke der Schicht des Gegenstands (10) zu bestimmen.

2. Vorrichtung nach Anspruch 1, **dadurch gekennzeichnet, dass** die erste Hauptstrahlrichtung im Betrieb senkrecht zu der der ersten Seite zugewandten Grenzfläche (18) der Schicht des Gegenstands (10) verläuft.

3. Vorrichtung nach einem der vorhergehenden Ansprüche, **dadurch gekennzeichnet, dass** das erste Sensorpaar durch einen Transceiver (12), umfassend den ersten Sender und den ersten Empfänger, gebildet ist.

4. Vorrichtung nach einem der vorhergehenden Ansprüche, **dadurch gekennzeichnet, dass** der zweite Sender (14) und der zweite Empfänger (16) auf gegenüberliegenden Seiten des ersten Sensorpaars, insbesondere des Transceivers (12), angeordnet sind.

5. Vorrichtung nach Anspruch 4, **dadurch gekennzeichnet, dass** der zweite Sender (14) und der zweite Empfänger (16) den gleichen Abstand zu dem ersten Sensorpaar, insbesondere dem Transceiver (12), aufweisen.

6. Vorrichtung nach den Ansprüchen 3 und 5, **dadurch gekennzeichnet, dass** die Auswerteeinrichtung (26) dazu ausgebildet ist, zur Überprüfung der Ausrichtung der Vorrichtung zu dem Gegenstand (10) im Betrieb zu prüfen, ob die Summe aus dem Quadrat des Abstands zwischen Transceiver (12) und zweitem Sender (14) oder Empfänger (16) und dem Quadrat des Abstands des Transceivers (12) von der der ersten Seite zugewandten Grenzfläche (18) der Schicht des Gegenstands (10) gleich dem Quadrat des Abstands des zweiten Senders (14) oder Empfängers (16) von dem Auftreffort der Terahertzstrahlung (20) des ersten Senders auf der der ersten Seite zugewandten Grenzfläche (18) der Schicht des Gegenstands (10) ist.

7. Vorrichtung nach einem der vorhergehenden Ansprüche, **dadurch gekennzeichnet, dass** der erste Sender, der erste Empfänger, der zweite Sender (14) und der zweite Empfänger (16) in einer Ebene, insbesondere entlang einer Linie in der Ebene, angeordnet sind, die im Betrieb parallel zu einer der ersten Seite zugewandten Grenzfläche (18) des Gegenstands (10) angeordnet ist.

8. Vorrichtung nach einem der vorhergehenden Ansprüche, **dadurch gekennzeichnet, dass** die Auswerteeinrichtung (26) dazu ausgebildet ist, anhand der zu der bestimmten ersten Zeitdifferenz und/oder ersten optischen Wegdifferenz ermittelten Kombinationen von möglichen Brechungsindexwerten und von möglichen Schichtdickenwerten eine berechnete zweite Zeitdifferenz und/oder zweite optische Wegdifferenz zu berechnen, diese mit der bestimmten zweiten Zeitdifferenz und/oder zweiten optischen Wegdifferenz zu vergleichen und die Kombination von Brechungsindexwert und von Schichtdickenwert als Brechungsindex und Schichtdicke der Schicht des Gegenstands (10) zu bestimmen, bei der bestimmte und berechnete zweite Zeitdifferenz und/oder zweite optische Wegdifferenz übereinstimmen und/oder dass die Auswerteeinrichtung (26) dazu ausgebildet ist, anhand der zu der bestimmten zweiten Zeitdifferenz und/oder zweiten optischen Wegdifferenz ermittelten Kombinationen von möglichen Brechungsindexwerten und von möglichen Schichtdickenwerten eine berechnete erste Zeitdifferenz und/oder erste optische Wegdifferenz zu berechnen, diese mit der bestimmten ersten Zeitdifferenz und/oder ersten optischen Wegdifferenz zu vergleichen und die Kombination von Brechungsindexwert und von Schichtdickenwert als Brechungsindex und Schichtdicke der Schicht des Gegenstands (10) zu bestimmen, bei der bestimmte und berechnete erste Zeitdifferenz und/oder erste optische Wegdifferenz übereinstimmen.

9. Vorrichtung nach Anspruch 3 oder nach den Ansprüchen 3 und 8, **dadurch gekennzeichnet, dass** die Auswerteeinrichtung (26) dazu ausgebildet ist, die möglichen Schichtdickenwerte jeweils aus dem Quotienten aus der bestimmten ersten Zeitdifferenz multipliziert mit der Lichtgeschwindigkeit im Vakuum und/oder ersten optischen Wegdifferenz und einem möglichen Brechungsindexwert zu berechnen.

10. Vorrichtung nach einem der Ansprüche 8 oder 9, **dadurch gekennzeichnet, dass** die Auswerteeinrichtung (26) dazu ausgebildet ist, die berechnete zweite und/oder erste Zeitdifferenz und/oder optische Wegdifferenz numerisch aus einem möglichen Brechungsindexwert und einem möglichen Schichtdickenwert zu berechnen.

11. Vorrichtung nach Anspruch 10, **dadurch gekennzeichnet, dass** die Auswerteeinrichtung (26) dazu ausgebildet ist, zur numerischen Berechnung ein Minimum einer Funktion durch Variieren eines den Brechungswinkel der von dem zweiten Sender (14) auf den Gegenstand (10) ausgesandten Terahertzstrahlung (24) beim Eintritt in die Schicht des Gegenstands (10) charakterisierenden Parameters zu bestimmen.

12. Vorrichtung nach den Ansprüchen 3 und 5 oder nach den Ansprüchen 3 und 5 und einem der weiteren vorhergehenden Ansprüche, **dadurch gekennzeichnet, dass** die Auswerteeinrichtung (26) dazu ausgebildet ist, weiterhin den Abstand des Transceivers (12) von der der ersten Seite zugewandten Grenzfläche (18) der Schicht des Gegenstands (10) und den Abstand des zweiten Senders (14) oder Empfängers (16) von dem Transceiver (12) zu berücksichtigen.

13. Vorrichtung nach einem der vorhergehenden Ansprüche, **dadurch gekennzeichnet, dass** der Winkel der zweiten Hauptstrahlrichtung gegenüber der ersten Hauptstrahlrichtung mehr als 5°, vorzugsweise mehr als 10°, weiter vorzugsweise mehr als 30° beträgt.

14. Vorrichtung nach einem der vorhergehenden Ansprüche, **dadurch gekennzeichnet, dass** sie eine tragbare Handheld-Vorrichtung ist.

15. Verfahren zum Bestimmen des Brechungsindex und/oder der Schichtdicke (d) einer Schicht eines Gegenstands (10), **gekennzeichnet durch** die Schritte:
• von einem auf einer ersten Seite des Gegenstands (10) angeordneten ersten Sender wird Terahertzstrahlung (20) von der ersten Seite in einer ersten Hauptstrahlrichtung auf den Gegenstand (10) ausgesendet, und von den die Schicht des Gegenstands (10) begrenzenden Grenzflächen reflektierte Terahertzstrahlung (20) des ersten Senders wird von einem ebenfalls auf der ersten Seite des Gegenstands (10) angeordneten ersten Empfänger empfangen,
• von einem ebenfalls auf der ersten Seite des Gegenstands (10) angeordneten zweiten Sender (14) wird Terahertzstrahlung (24) von der ersten Seite in einer zweiten Hauptstahlrichtung, die unter einem Winkel gegenüber der ersten Hauptstrahlrichtung verläuft, auf den Gegenstand (10) ausgesendet, und von den die Schicht des Gegenstands (10) begrenzenden Grenzflächen reflektierte Terahertzstrahlung (24) des zweiten Senders wird von einem ebenfalls auf der ersten Seite des Gegenstands (10) angeordneten zweiten Empfänger (16) empfangen,
• aus den von dem ersten Empfänger empfangenen Messsignalen und den von dem zweiten Empfänger (16) empfangenen Messsignalen wird durch eine Auswerteeinrichtung (26) auf Grundlage der unterschiedlichen Laufzeiten der von den Grenzflächen (18, 22) der Schicht des Gegenstands (10) reflektierten Terahertzstrahlung (20) des ersten Senders und der unterschiedlichen Laufzeiten der von den Grenzflächen (18, 22) der Schicht des Gegenstands (10) reflektierten Terahertzstrahlung (20) des zweiten Senders (14) der Brechungsindex und/oder die Schichtdicke der Schicht des Gegenstands (10) bestimmt,
• wobei die Auswerteeinrichtung (26) aus den von dem ersten Empfänger empfangenen Messsignalen eine erste Zeitdifferenz und/oder erste optische Wegdifferenz zwischen der von den Grenzflächen (18, 22) der Schicht des Gegenstands (10) reflektierten Terahertzstrahlung (20) des ersten Senders bestimmt, und aus den von dem zweiten Empfänger (16) empfangenen Messsignalen eine zweite Zeitdifferenz und/oder zweite optische Wegdifferenz zwischen der von den Grenzflächen (18, 22) der Schicht des Gegenstands (10) reflektierten Terahertzstrahlung (24) des zweiten Senders (14) bestimmt, und
• wobei die Auswerteeinrichtung (26) weiter zu der bestimmten ersten Zeitdifferenz und/oder ersten optischen Wegdifferenz passende Kombinationen von möglichen Brechungsindexwerten und möglichen Schichtdickenwerten der Schicht des Gegenstands (10) ermittelt, aus den ermittelten Kombinationen eine zur bestimmten zweiten Zeitdifferenz und/oder zweiten optischen Wegdifferenz passende Kombination bestimmt, und diese bestimmte passende Kombination des Brechungsindexwerts und des Schichtdickenwerts als Brechungsindex und Schichtdicke der Schicht des Gegenstands (10) bestimmt und/oder dass die Auswerteeinrichtung (26) weiter zu der bestimmten zweiten Zeitdifferenz und/oder zweiten optischen Wegdifferenz passende Kombinationen von möglichen Brechungsindexwerten und möglichen Schichtdickenwerten der Schicht des Gegenstands (10) ermittelt, aus den ermittelten Kombinationen eine zur bestimmten ersten Zeitdifferenz und/oder ersten optischen Wegdifferenz passende Kombination bestimmt, und diese bestimmte passende Kombination des Brechungsindexwerts und des Schichtdickenwerts als Brechungsindex und Schichtdicke der Schicht des Gegenstands (10) bestimmt.

16. Verfahren nach Anspruch 15, **dadurch gekennzeichnet, dass** es mit einer Vorrichtung nach einem der Ansprüche 1 bis 14 durchgeführt wird.

## Claims

1. A device for determining the refractive index and/or the layer thickness of a layer of an object (10), **characterized in that**
• a first sensor pair arranged on a first side of the object (10) during operation and consisting of a first transmitter and a first receiver for terahertz radiation (20), and a second sensor pair also arranged on the first side of the object (10) during operation and consisting of a second transmitter (14) and a second receiver (16) for terahertz radiation (24) is provided,
• the first transmitter emits terahertz radiation (20) during operation onto the object (10) from the first side in a first main beam direction and the first receiver receives terahertz radiation (20) of the first transmitter reflected by the interfaces delimiting the layer of the object (10),
• the second transmitter (14) emits terahertz radiation (24) during operation onto the object (10) from the first side in a second main beam direction, which extends at an angle to the first main beam direction, and the second receiver (16) receives terahertz radiation (24) of the second transmitter (14) reflected by the interfaces delimiting the layer of the object (10), and
• an evaluation apparatus (26) is provided, to which the measurement signals received by the first receiver and the measurement signals received by the second receiver (16) are applied, and which is designed to determine the refractive index and/or the layer thickness of the layer of the object (10) from the applied measurement signals on the basis of the different times of flight of the terahertz radiation (20) of the first transmitter reflected by the interfaces (18, 22) of the layer of the object (10) and the different times of flight of the terahertz radiation (20) of the second transmitter (14) reflected by the interfaces (18, 22) of the layer of the object (10),
• wherein the evaluation apparatus (26) is designed to determine a first time difference and/or first optical path difference between the terahertz radiation (20) of the first transmitter reflected by the interfaces (18, 22) of the layer of the object (10) from the measurement signals received by the first receiver, and to determine a second time difference and/or second optical path difference between the terahertz radiation (24) of the second transmitter (14) reflected by the interfaces (18, 22) of the layer of the object (10) from the measurement signals received by the second receiver (16), and
• wherein the evaluation apparatus (26) is further designed to ascertain combinations of possible refractive index values and possible layer thickness values of the layer of the object (10) that correspond to the determined first time difference and/or first optical path difference, to determine a combination suitable for the determined second time difference and/or second optical path difference from the ascertained combinations, and to determine this determined suitable combination of the refractive index value and layer thickness value as a refractive index and layer thickness of the layer of the object (10), and/or **in that** the evaluation apparatus (26) is further designed to ascertain combinations of possible refractive index values and possible layer thickness values of the layer of the object (10) that correspond to the determined second time difference and/or second optical path difference, to determine a combination that corresponds to the determined first time difference and/or first optical path difference from the ascertained combinations, and to determine this determined suitable combination of the refractive index value and layer thickness value as a refractive index and layer thickness of the layer of the object (10).

2. The device according to claim 1, **characterized in that** the first main beam direction, during operation, extends perpendicularly to the interface (18) of the layer of the object (10) facing the first side.

3. The device according to one of the preceding claims, **characterized in that** the first sensor pair is formed of a transceiver (12), comprising the first transmitter and the first receiver.

4. The device according to one of the preceding claims, **characterized in that** the second transmitter (14) and the second receiver (16) are arranged on opposite sides of the first sensor pair, in particular of the transceiver (12).

5. The device according to claim 4, **characterized in that** the second transmitter (14) and the second receiver (16) are at the same distance from the first sensor pair, in particular the transceiver (12).

6. The device according to claims 3 and 5, **characterized in that** the evaluation apparatus (26) is designed, during operation, in order to check the orientation of the device relative to the object (10), to check whether the sum of the square of the distance between the transceiver (12) and second transmitter (14) or receiver (16) and the square of the distance between the transceiver (12) and the interface (18) of the layer of the object (10) facing the first side is equal to the square of the distance between the second transmitter (14) or receiver (16) and the point of incidence of the terahertz radiation (20) of the first transmitter on the interface (18) of the layer of the object (10) facing the first side.

7. The device according to one of the preceding claims, **characterized in that** the first transmitter, the first receiver, the second transmitter (14), and the second receiver (16) are arranged in a plane, in particular along a line in the plane that, during operation, is arranged parallel to an interface (18) of the object (10) facing the first side.

8. The device according to one of the preceding claims, **characterized in that** the evaluation apparatus (26) is designed to calculate a calculated second time difference and/or second optical path difference based on the combinations of possible refractive index values and possible layer thickness values ascertained for the determined first time difference and/or first optical path difference, to compare this calculated second time difference and/or second optical path difference with the determined second time difference and/or second optical path difference and to determine, as a refractive index and layer thickness of the layer of the object (10), the combination of refractive index value and layer thickness value with which the determined and calculated second time difference and/or second optical path difference match, and/or **in that** the evaluation apparatus (26) is designed to calculate a calculated first time difference and/or first optical path difference based on the combinations of possible refractive index values and possible layer thickness values ascertained for the determined second time difference and/or second optical path difference, to compare this calculated first time difference and/or first optical path difference with the determined first time difference and/or first optical path difference and to determine, as a refractive index and layer thickness of the layer of the object (10), the combination of refractive index value and layer thickness value with which the determined and calculated first time difference and/or first optical path difference match.

9. The device according to claim 3 or according to claims 3 and 8, **characterized in that** the evaluation apparatus (26) is designed to calculate the possible layer thickness values in each case from the quotient of the determined first time difference multiplied by the speed of light in a vacuum and/or first optical path difference and a possible refractive index value.

10. The device according to one of claims 8 or 9, **characterized in that** the evaluation apparatus (26) is designed to calculate the calculated second and/or first time difference and/or optical path difference numerically from a possible refractive index value and a possible layer thickness value.

11. The device according to claim 10, **characterized in that** the evaluation apparatus (26), for the numerical calculation, is designed to determine a minimum of a function by varying a parameter that characterizes the angle of refraction of the terahertz radiation (24) emitted by the second transmitter (14) onto the object (10) when said terahertz radiation enters the layer of the object (10).

12. The device according to claims 3 and 5 or according to claims 3 and 5 and one of the other preceding claims, **characterized in that** the evaluation apparatus (26) is designed to further take into account the distance between the transceiver (12) and the interface (18) of the layer of the object (10) facing the first side and the distance between the second transmitter (14) or receiver (16) and the transceiver (12).

13. The device according to one of the preceding claims, **characterized in that** the angle of the second main beam direction relative to the first main beam direction is more than 5°, preferably more than 10°, further preferably more than 30°.

14. The device according to one of the preceding claims, **characterized in that** it is a portable handheld device.

15. A method for determining the refractive index and/or layer thickness (d) of a layer of an object (10), **characterized by** the following steps:
• terahertz radiation (20) is emitted by a first transmitter arranged on a first side of the object (10) onto the object (10) from the first side in a first main beam direction, and terahertz radiation (20) of the first transmitter reflected by the interfaces delimiting the layer of the object (10) is received by a first receiver also arranged on the first side of the object (10),
• terahertz radiation (24) is emitted by a second transmitter (14) also arranged on the first side of the object (10) onto the object (10) from the first side in a second main beam direction, which extends at an angle to the first main beam direction, and terahertz radiation (24) of the second transmitter reflected by the interfaces delimiting the layer of the object (10) is received by a second receiver (16) also arranged on the first side of the object (10),
• the refractive index and/or the layer thickness of the layer of the object (10) is determined by an evaluation apparatus (26) from the measurement signals received by the first receiver and the measurement signals received by the second receiver (16) on the basis of the different times of flight of the terahertz radiation (20) of the first transmitter reflected by the interfaces (18, 22) of the layer of the object (10) and the different times of flight of the terahertz radiation (20) of the second transmitter (14) reflected by the interfaces (18, 22) of the layer of the object (10),
• wherein the evaluation apparatus (26) determines a first time difference and/or first optical path difference between the terahertz radiation (20) of the first transmitter reflected by the interfaces (18, 22) of the layer of the object (10) from the measurement signals received by the first receiver, and determines a second time difference and/or second optical path difference between the terahertz radiation (24) of the second transmitter (14) reflected by the interfaces (18, 22) of the layer of the object (10) from the measurement signals received by the second receiver (16), and
• wherein the evaluation apparatus (26) further ascertains combinations of possible refractive index values and possible layer thickness values of the layer of the object (10) that correspond to the determined first time difference and/or first optical path difference, determines a combination suitable for the determined second time difference and/or second optical path difference from the ascertained combinations, and determines this determined suitable combination of the refractive index value and layer thickness value as a refractive index and layer thickness of the layer of the object (10), and/or in that the evaluation apparatus (26) further ascertains combinations of possible refractive index values and possible layer thickness values of the layer of the object (10) that correspond to the determined second time difference and/or second optical path difference, determines a combination that corresponds to the determined first time difference and/or first optical path difference from the ascertained combinations, and determines this determined suitable combination of the refractive index value and layer thickness value as a refractive index and layer thickness of the layer of the object (10).

16. The method according to claim 15, **characterized in that** it is carried out with a device according to one of claims 1 to 14.

## Revendications

1. Dispositif de détermination de l'indice de réfraction et/ou de l'épaisseur de couche d'une couche d'un objet (10), **caractérisé en ce que**
• il est prévu une première paire de capteurs, disposée sur un premier côté de l'objet (10) pendant le fonctionnement, constituée d'un premier émetteur et d'un premier récepteur de rayonnement téraherz (20), ainsi qu'une deuxième paire de capteurs, également disposée sur un premier côté de l'objet (10) pendant le fonctionnement, constituée d'un deuxième émetteur (14) et d'un deuxième récepteur (16) de rayonnement téraherz (24),
• **en ce que** pendant le fonctionnement, le premier émetteur émet un rayonnement téraherz (20) vers l'objet (10) depuis le premier côté, dans une première direction de rayonnement principale, et le premier récepteur reçoit le rayonnement téraherz (20) du premier émetteur réfléchi par les surfaces limites délimitant la couche de l'objet (10),
• **en ce que** pendant le fonctionnement, le deuxième émetteur (14) émet un rayonnement téraherz (24) vers l'objet (10) depuis le premier côté, dans une deuxième direction de rayonnement principale, laquelle s'étend sous un angle par rapport à la première direction de rayonnement principale, et le deuxième récepteur (16) reçoit le rayonnement téraherz (24) du deuxième émetteur (14) réfléchi par les surfaces limites délimitant la couche de l'objet (10), et
• **en ce qu'**il est prévu une unité d'évaluation (26), à laquelle sont appliqués les signaux de mesure reçus par le premier récepteur ainsi que les signaux de mesure reçus par le deuxième récepteur (16), et laquelle est conçue pour déterminer l'indice de réfraction et/ou l'épaisseur de couche de la couche de l'objet (10), à partir des signaux appliqués, sur la base des différents temps de propagation du rayonnement téraherz (20) du premier émetteur réfléchi par les surfaces limites (18, 22) de la couche de l'objet (10) et des différents temps de propagation du rayonnement téraherz (20) du deuxième émetteur (14) réfléchi par les surfaces limites (18, 22) de la couche de l'objet (10),
• dans lequel l'unité d'évaluation (26) est conçue pour déterminer, à partir des signaux de mesure reçus par le premier récepteur, une première différence temporelle et/ou une première différence de chemin optique entre le rayonnement téraherz (20) du premier émetteur réfléchi par les surfaces limites (18, 22) de la couche de l'objet (10), et pour déterminer, à partir des signaux de mesure reçus par le deuxième récepteur (16), une deuxième différence temporelle et/ou une deuxième différence de chemin optique entre le rayonnement téraherz (24) du deuxième émetteur (14) réfléchi par les surfaces limites (18, 22) de la couche de l'objet (10), et
• dans lequel l'unité d'évaluation (26) est en outre conçue pour identifier des combinaisons de valeurs d'indice de réfraction possibles et de valeurs d'épaisseur de couche possibles de la couche de l'objet (10) correspondant à la première différence temporelle et/ou à la première différence de chemin optique déterminées, pour déterminer une combinaison correspondant à la deuxième différence temporelle et/ou à la deuxième différence de chemin optique déterminées, à partir des combinaisons identifiées, et pour déterminer cette combinaison correspondante déterminée de la valeur de l'indice de réfraction et de la valeur de l'épaisseur de couche comme étant l'indice de réfraction et l'épaisseur de couche de la couche de l'objet (10), et/ou **en ce que** l'unité d'évaluation (26) est en outre conçue pour identifier des combinaisons de valeurs d'indice de réfraction possibles et de valeurs d'épaisseur de couche possibles de la couche de l'objet (10) correspondant à la deuxième différence temporelle et/ou à la deuxième différence de chemin optique déterminées, pour déterminer une combinaison correspondant à la première différence temporelle et/ou à la première différence de chemin optique déterminées, à partir des combinaisons identifiées, et pour déterminer cette combinaison correspondante déterminée de la valeur de l'indice de réfraction et de la valeur de l'épaisseur de couche comme étant l'indice de réfraction et l'épaisseur de couche de la couche de l'objet (10).

2. Dispositif selon la revendication 1, **caractérisé en ce que** pendant le fonctionnement, la première direction de rayonnement principale s'étend perpendiculairement à la surface limite (18) de la couche de l'objet (10) tournée vers le premier côté.

3. Dispositif selon l'une des revendications précédentes, **caractérisé en ce que** la première paire de capteurs est formée par un émetteur-récepteur (12) comportant le premier émetteur et le premier récepteur.

4. Dispositif selon l'une des revendications précédentes, **caractérisé en ce que** le deuxième émetteur (14) et le deuxième récepteur (16) sont disposés sur des côtés opposés de la première paire de capteurs, en particulier de l'émetteur-récepteur (12).

5. Dispositif selon la revendication 4, **caractérisé en ce que** le deuxième émetteur (14) et le deuxième récepteur (16) présentent la même distance par rapport à la première paire de capteurs, en particulier par rapport à l'émetteur-récepteur (12).

6. Dispositif selon les revendications 3 et 5, **caractérisé en ce que** l'unité d'évaluation (26) est conçue pour vérifier, pour la vérification de l'orientation du dispositif par rapport à l'objet (10) pendant le fonctionnement, si la somme du carré de la distance entre l'émetteur-récepteur (12) et le deuxième émetteur (14) ou le deuxième récepteur (16) et du carré de la distance de l'émetteur-récepteur (12) par rapport à la surface limite (18) de la couche de l'objet (10) tournée vers le premier côté est égale au carré de la distance du deuxième émetteur (14) ou du deuxième récepteur (16) par rapport au point d'incidence du rayonnement téraherz (20) du premier émetteur sur la surface limite (18) de la couche de l'objet (10) tournée vers le premier côté.

7. Dispositif selon l'une des revendications précédentes, **caractérisé en ce que** le premier émetteur, le premier récepteur, le deuxième émetteur (14) et le deuxième récepteur (16) sont disposés dans un plan, en particulier le long d'une ligne dans le plan, lequel est disposé parallèlement à une surface limite (18) de l'objet (10) tournée vers le premier côté pendant le fonctionnement.

8. Dispositif selon l'une des revendications précédentes, **caractérisé en ce que** l'unité d'évaluation (26) est conçue pour calculer une deuxième différence temporelle et/ou une deuxième différence de chemin optique calculées, à l'aide des combinaisons de valeurs d'indice de réfraction possibles et de valeurs d'épaisseur de couche possibles identifiées pour la première différence temporelle et/ou pour la première différence de chemin optique déterminées, pour comparer celles-ci avec la deuxième différence temporelle et/ou la deuxième différence de chemin optique déterminées, et pour déterminer la combinaison de la valeur d'indice de réfraction et de la valeur d'épaisseur de couche comme étant l'indice de réfraction et l'épaisseur de couche de la couche de l'objet (10), dans laquelle la deuxième différence temporelle et/ou la deuxième différence de chemin optique déterminées et calculées coïncident, et/ou **en ce que** l'unité d'évaluation (26) est conçue pour calculer une première différence temporelle et/ou une première différence de chemin optique calculées, à l'aide des combinaisons de valeurs d'indice de réfraction possibles et de valeurs d'épaisseur de couche possibles identifiées pour la deuxième différence temporelle et/ou pour la deuxième différence de chemin optique déterminées, pour comparer celles-ci avec la première différence temporelle et/ou la première différence de chemin optique déterminées, et pour déterminer la combinaison de la valeur d'indice de réfraction et de la valeur d'épaisseur de couche comme étant l'indice de réfraction et l'épaisseur de couche de la couche de l'objet (10), dans laquelle la première différence temporelle et/ou la première différence de chemin optique déterminées et calculées coïncident.

9. Dispositif selon la revendication 3 ou selon les revendications 3 et 8, **caractérisé en ce que** l'unité d'évaluation (26) est conçue pour calculer les valeurs d'épaisseur de couche possibles respectivement à partir du quotient entre, d'une part, la première différence temporelle déterminée multipliée par la vitesse de la lumière dans le vide et/ou la première différence de chemin optique déterminée et, d'autre part, une valeur possible d'indice de réfraction.

10. Dispositif selon l'une des revendications 8 ou 9, **caractérisé en ce que** l'unité d'évaluation (26) est conçue pour calculer numériquement la deuxième et/ou la première différence temporelle et/ou différence de chemin optique calculées, à partir d'une valeur d'indice de réfraction possible et d'une valeur d'épaisseur de couche possible.

11. Dispositif selon la revendication 10, **caractérisé en ce que** l'unité d'évaluation (26) est conçue pour déterminer, pour le calcul numérique, un minimum d'une fonction par variation d'un paramètre caractérisant l'angle de réfraction du rayonnement téraherz (24) émis par le deuxième émetteur (14) vers l'objet (10) lors de son entrée dans la couche de l'objet (10).

12. Dispositif selon les revendications 3 et 5 ou selon les revendications 3 et 5 et l'une des autres revendications précédentes, **caractérisé en ce que** l'unité d'évaluation (26) est conçue pour tenir compte en outre de la distance de l'émetteur-récepteur (12) par rapport à la surface limite (18) de la couche de l'objet (10) tournée vers le premier côté et de la distance du deuxième émetteur (14) ou du deuxième récepteur (16) par rapport à l'émetteur-récepteur (12).

13. Dispositif selon l'une des revendications précédentes, **caractérisé en ce que** l'angle de la deuxième direction de rayonnement principale par rapport à la première direction de rayonnement principale est supérieur à 5°, de préférence supérieur à 10°, encore plus préférentiellement supérieur à 30°.

14. Dispositif selon l'une des revendications précédentes, **caractérisé en ce que** celui-ci est un dispositif à main portatif.

15. Procédé de détermination de l'indice de réfraction et/ou de l'épaisseur de couche (d) d'une couche d'un objet (10), **caractérisé par** les étapes suivantes :
• un rayonnement téraherz (20) est émis vers l'objet (10), depuis le premier côté, dans une première direction de rayonnement principale, par un premier émetteur disposé sur un premier côté de l'objet (10), et le rayonnement téraherz (20) du premier émetteur réfléchi par les surfaces limites délimitant la couche de l'objet (10) est reçu par un premier récepteur également disposé sur le premier côté de l'objet (10),
• un rayonnement téraherz (24) est émis vers l'objet (10) depuis le premier côté, dans une deuxième direction de rayonnement principale, laquelle s'étend sous un angle par rapport à la première direction de rayonnement principale, par un deuxième émetteur (14) également disposé sur le premier côté de l'objet (10), et le rayonnement téraherz (24) du deuxième émetteur réfléchi par les surfaces limites délimitant la couche de l'objet (10) est reçu par un deuxième récepteur (16) également disposé sur le premier côté de l'objet (10),
• l'indice de réfraction et/ou l'épaisseur de couche de la couche de l'objet (10) sont déterminés par une unité d'évaluation (26), à partir des signaux de mesure reçus par le premier récepteur et des signaux de mesure reçus par le deuxième récepteur (16), sur la base des différents temps de propagation du rayonnement téraherz (20) du premier émetteur réfléchi par les surfaces limites (18, 22) de la couche de l'objet (10) et des différents temps de propagation du rayonnement téraherz (20) du deuxième émetteur (14) réfléchi par les surfaces limites (18, 22) de la couche de l'objet (10),
• dans lequel l'unité d'évaluation (26) détermine, à partir des signaux de mesure reçus par le premier récepteur, une première différence temporelle et/ou une première différence de chemin optique entre le rayonnement téraherz (20) du premier émetteur réfléchi par les surfaces limites (18, 22) de la couche de l'objet (10), et détermine, à partir des signaux de mesure reçus par le deuxième récepteur (16), une deuxième différence temporelle et/ou une deuxième différence de chemin optique entre le rayonnement téraherz (24) du deuxième émetteur (14) réfléchi par les surfaces limites (18, 22) de la couche de l'objet (10), et
• dans lequel l'unité d'évaluation (26) identifie en outre des combinaisons de valeurs d'indice de réfraction possibles et de valeurs d'épaisseur de couche possibles de la couche de l'objet (10) correspondant à la première différence temporelle et/ou à la première différence de chemin optique déterminées, détermine une combinaison correspondant à la deuxième différence temporelle et/ou à la deuxième différence de chemin optique déterminées, à partir des combinaisons identifiées, et détermine cette combinaison correspondante déterminée de la valeur de l'indice de réfraction et de la valeur de l'épaisseur de couche comme étant l'indice de réfraction et l'épaisseur de couche de la couche de l'objet (10), et/ou en ce que l'unité d'évaluation (26) identifie en outre des combinaisons de valeurs d'indice de réfraction possibles et de valeurs d'épaisseur de couche possibles de la couche de l'objet (10) correspondant à la deuxième différence temporelle et/ou à la deuxième différence de chemin optique déterminées, détermine une combinaison correspondant à la première différence temporelle et/ou à la première différence de chemin optique à partir des combinaisons identifiées, et détermine cette combinaison correspondante déterminée de la valeur de l'indice de réfraction et de la valeur de l'épaisseur de couche comme étant l'indice de réfraction et l'épaisseur de couche de la couche de l'objet (10).

16. Procédé selon la revendication 15, **caractérisé en ce que** celui-ci est mis en œuvre au moyen d'un dispositif selon l'une des revendications 1 à 14.
